# EUROPEAN PATENT APPLICATION

(11) **EP 1 813 846 A2**
(43) Date of publication of application: **01.08.2007**
(21) Application number: 07101525.9
(22) Date of filing: 31.01.2007
(51) Int. Cl.: F16K 17/04

(54) **Safety valve for fluids**

(30) Priority: 31.01.2006 IT VI20060033
(71) Applicant: Nostrali Arnaldo S.r.l., 36054 Montebello Vicentino (VI) (IT)
(72) Inventor: Mattioli, Luca, 36041Alte Ceccato (VI) (IT); Vian, Stefano, 31021 Mogliano Veneto (TV) (IT)
(74) Representative: Bonini, Ercole

(57) **Abstract**

The invention is a safety valve (1;100) for pressurized fluid systems comprising a valve body (2) comprising one inlet way (3) that can be connected to the system containing the pressurized fluid; a shutter (5) coupled to the valve body (2); an outlet way (7) for discharging the pressurized fluid outside the system and elastic means (8;108) interposed between the shutter (5) and retaining means (11) present in the valve body (2). The retaining means (11) comprise a cap (12;112) comprising a core (13;113) projecting towards the outside of the valve body (2) through a hole (14) present in the end (15) opposite the inlet way (3). The cap (12;112) is provided with a duct (23) comprising one inlet (23a) in communication with the inside of the valve body (2) and one outlet (23b) in communication with the outside and present on the lateral edge of the core (13; 113) in order to create the outlet way (7).

## Description

The invention concerns a safety valve particularly suited to be used in pressurized fluid systems like, for example, home heating systems.

As already known, pressurized fluid systems must be provided with a series of safety devices suited to prevent any risks due to malfunctions.

In particular, the use of safety valves is known, which substantially are automatic drain valves, set to discharge the fluid present in the system towards the outside when the pressure exceeds a preset threshold.

For this purpose, it is very important for these safety valves to be always functioning perfectly and set at the predefined opening value, since any malfunction can damage the system or, even worse, create dangerous situations.

All the safety valves of known type substantially comprise a valve body consisting of a tubular element in which it is possible to identify an inlet way communicating with the inside of the system through a shutter body that regulates the passage of fluid in case of overpressure, and an outlet way for discharging the same fluid outside the system.

Said outlet way is generally present in the lateral surface of the valve body, in order to direct the pressurized fluid being discharged laterally and thus avoid any potentially dangerous situations.

In fact, if the fluid that is being discharged is very hot, it may cause damage to the persons or objects in the vicinity.

Since in the safety valves of known type the direction of the outlet way cannot be adjusted after installation, in order to convey the discharge flow of the valve in a specific direction it is necessary to adapt the way it is screwed to the system, so as to lock it in the position that is most suitable for this purpose.

In particular, it is necessary to tighten the locking nut with a wrench in a differentiated way, until the outlet way is positioned in the desired direction.

This, however, involves some acknowledged drawbacks, since this manoeuvre may require excessive tightening of the valve with consequent possible damage to the seal or, vice versa, insufficient tightening with the risk of leakages after the system has been used for a certain period of time.

In other words, it can be understood that the combination of the optimal tightening of the valve with the desired direction of the outlet way can be obtained only by chance.

Another drawback posed by the valves of known type is represented by the fact that it is not possible to modify the discharge direction after assembly.

The safety valves of known type have also another limitation, due to the fact that the centering of the inner elastic members is guaranteed only by the presence of plane surfaces suitable for supporting the ends of the elastic means.

If said planarity is not guaranteed, there may be a slight misalignment or displacement of the spring during use, with consequent modification of the setting values.

The object of the present invention is to overcome all the above-mentioned drawbacks that are typical of the safety valves carried out according to the known art.

In particular, it is a first aim of the invention to produce a safety valve that allows the discharge direction of the pressurized fluid to be adjusted even after installation of the valve.

It is a further aim of the invention to produce a valve that also ensures better centering of the inner elastic members.

The aims described above have been achieved through the production of a safety valve for pressurized fluid systems that, according to the main claim, comprises a valve body in which it is possible to identify:
- at least one inlet way carried out at the level of one end of said valve body that can be connected to said system containing pressurized fluid;
- at least one shutter slidingly coupled to said valve body and sealingly cooperating with an annular edge that defines the perimeter of said inlet way;
- at least one outlet way for discharging said pressurized fluid outside the system;
- elastic means having a first end positioned against said shutter and a second end positioned against retaining means provided in said valve body,
and is characterized in that said retaining means comprise a cap in which it is possible to identify a core, projecting towards the outside of said valve body through a hole present in the end opposite said inlet way, wherein said cap is provided with a duct comprising at least one inlet in communication with the inside of said valve body and at least one outlet in communication with the outside and present on the lateral surface of said core in order to create said outlet way.

An annular body, present at one end of the core and contained inside the valve body, projects from the lateral surface of the core in order to define a first counteracting surface, positioned against the second end of the elastic means, and a second counteracting surface opposite the first counteracting surface and arranged so as to be in contact with a perimeter recess obtained on the annular edge of the hole in the valve body.

According to the preferred embodiment of the invention described herein, the annular body and the core are carried out in a single body and have a circular shape in each cross section.

According to a construction variant, the cap is also provided with a centering body that cooperates with the elastic means in order to keep them always aligned and coaxial with the longitudinal axis defined by the valve.

Advantageously, the discharge flow can be directed even after assembling the valve, since the lateral annular edge of the cap is free to revolve on its own axis in the valve body.

Still advantageously, the annular body also allows the end of the elastic means to rest against a uniform annular surface.

Still to advantage, since the annular body and the core are carried out in a single body, the valve that is the subject of the invention comprises fewer components than the equivalent valves of known type.

Consequently and advantageously, since the outlet way ends on the lateral surface of the core, the fact that the cap can revolve on its development axis with respect to the valve body makes it possible to adjust the discharge direction of the valve of the invention after installation in the system.

The aims and advantages described above will be highlighted in greater detail in the description of preferred embodiments of the invention, with reference to the attached drawings, wherein:
- Figure 1 is a side cross- section view of the valve that is the subject of the invention;
- Figure 2 is a side cross-section view of a detail of the valve that is the subject of the invention;
- Figure 3 is an axonometric view of the detail shown in Figure 2;
- Figure 4 is a side exploded view of the valve that is the subject of the invention;
- Figure 5 is a side cross-section view of a construction variant of the valve carried out according to the invention.

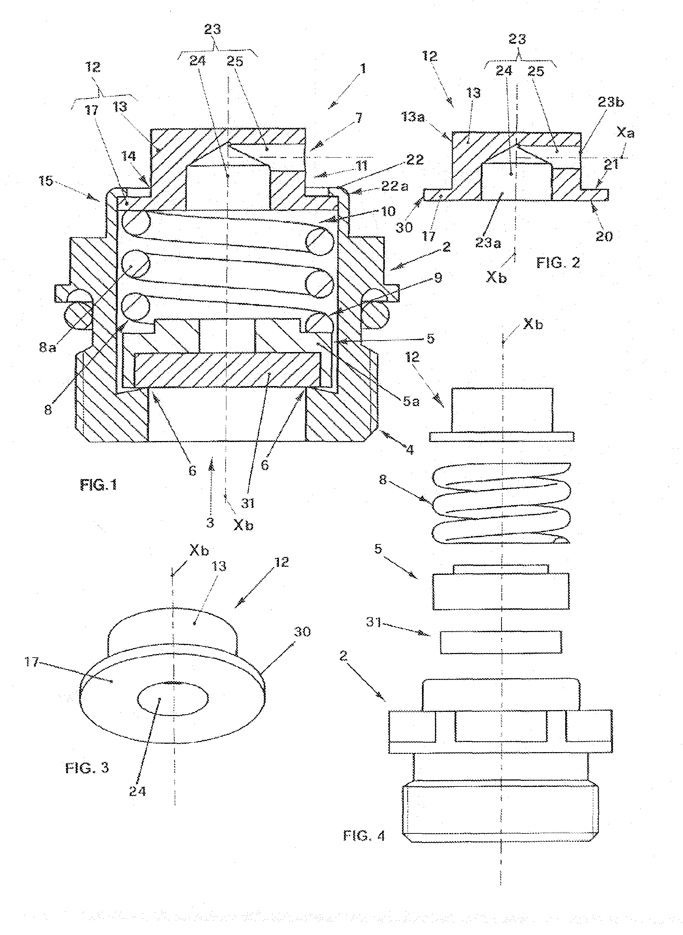

The safety valve that is the subject of the invention is represented in Figure 1, where it is indicated as a whole by **1** and where it can be seen that it comprises a valve body **2** in which it is possible to identify:
- one inlet way **3** carried out at the level of the end **4** of the valve body **2** that is connected to the system containing pressurized fluid;
- one shutter **5** slidingly coupled to the valve body **2** and sealingly cooperating with the annular edge **6** that defines the perimeter of the inlet way **3;**
- one outlet way **7** for discharging the pressurized fluid outside the system;
- elastic means **8** having a first end **9** positioned against the shutter **5** and a second end **10** positioned against retaining means **11** provided in the valve body **2.**

According to the invention, the retaining means **11** comprise a cap **12** in which it is possible to identify, as can be seen also in Figure 2, a core **13,** projecting towards the outside of the valve body **2** through a hole **14** present in the end **15** opposite the inlet way **3,** where a duct **23** is provided, said duct comprising one inlet **23a** in communication with the inside of the valve body **2** and one outlet **23b** in communication with the outside and present on the lateral edge of the core **13** in order to create the outlet way **7.**

An annular body **17** present at one end of the core **13** and contained inside the valve body **2** projects from the lateral surface **13a** of the core **13** in order to define a first counteracting surface **20,** positioned against the second end **10** of the elastic means **8,** and a second counteracting surface **21** opposite the first counteracting surface **20,** arranged so as to be in contact with a perimeter recess **22** obtained on the annular edge **22a** of the hole **14** in the valve body **2.** According to the preferred embodiment of the invention described herein, the core **13** and the annular body **17** are preferably carried out in a single body, in such a way as to advantageously allow the number of components of the valve **1** of the invention to be reduced.

However, it is clear that in a different embodiment of the invention the core **13** and the annular body **17** may also be separated from each other.

As regards the duct **23,** it comprises an inlet channel **24,** one end of which coincides with the inlet **23a** in communication with the inside of the valve body **2** and an outlet channel **25** one end of which coincides with the outlet **23b** in communication with the outside of the safety valve **1** that is the subject of the invention.

In particular, the outlet channel **25** defines a first longitudinal axis **Xa** incident on a second longitudinal axis **Xb** defined by the inlet channel **24** and the cap **12.**

As regards the cap **12,** as shown in Figure 3, any cross-section plane cutting the longitudinal axis **Xb** defines a circular cross section.

Furthermore, the cross section of the inside of the valve body **2** has a circular profile whose diameter corresponds to the diameter of the annular edge **30** of the annular body **17,** in such a way as to obtain a free sliding coupling.

Therefore, the cap **12** is advantageously free to revolve around the second longitudinal axis **Xb** with respect to the valve body **2,** thus making it possible to adjust the discharge direction of the overpressurized fluid flow from the valve **1,** since the outlet way **7** opens towards the external environment beside the cap **12** itself.

The elastic means **8** are generally constituted by a cylindrical helical spring **8a,** however this embodiment is not intended to represent a limitation for other embodiments not represented herein, in which the spring has different shapes like, for example, the shape of a truncated cone.

As regards the perimeter recess **22** of the hole **14** in the valve body **2,** it is obtained through cold plastic deformation of the annular edge **22a** of the hole **14** itself.

In particular, said cold plastic deformation can be carried out with a calking or expanding operation.

Finally, the shutter **5** comprises a seal holder **5a** with a sealing pad **31** that rests against the annular edge **6** of the inlet way **3** to ensure the tightness of the valve **1** when not in operation.

The seal holder **5a** and the sealing pad **31** are separate, but in a different embodiment they can also be carried out in a single body.

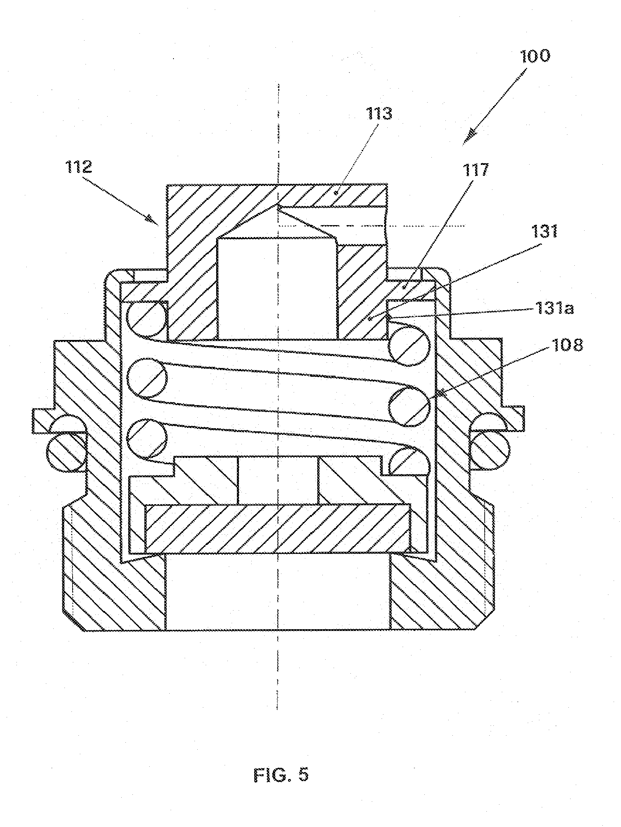

A construction variant of the valve that is the subject of the invention is shown in Figure 5, where it is indicated as a whole by **100** and is differentiated from the embodiment described above owing to the fact that the cap **112** comprises a centering body **131** which projects from the annular body **117** on the side opposite the core **113** and slidingly defines a precision coupling with the inside of the elastic means **108.**

In particular, the external surface **131a** of the centering body **131** is sized so as to slidingly define a precision coupling with the lateral inside surface of the helical spring **108a** that makes up the above mentioned elastic means **108.**

Therefore, the cap **112** advantageously carries out the centering of the elastic means **108,** in such a way as to obtain a perfect distribution of the pressure and a perfect setting of the valve **100,** even if the ends of the elastic means do not rest in a perfectly level position on the shutter and the annular body.

In practice, to assemble the valve, as shown in the exploded view of Figure 4, the operator arranges the following components in succession inside the valve body **2:** the shutter **5** complete with seal holder **5a** and sealing pad **31,** the elastic means **8** and the cap **12.**

The semi-finished product constituted as described is then placed in a clamping device that compresses the cap **12,** and thus also the elastic means **8,** with a force that is proportional to the preset opening pressure value. Once said value has been reached, the clamping device compresses the annular edge **22a** of the hole **14** and plastically deforms it obtaining the perimeter recess **22** that acts against the cap **12** to make the safety valve **1** tight.

The above clearly shows that tampering with the valve **1** means damaging it irreparably.

It is clear that the assembly of the valve **1** carried out as described above does not require complex machines.

The valve **1** obtained by proceeding as described above is ready to be used on a pressurized fluid system.

It is generally associated with the system by screwing a thread made on the outside of the valve body **2,** near the end **4,** to a counter thread present on a through hole made in the system.

At the end of this operation, the operator rotates the cap **12** in order to direct the outlet way **7** as desired.

In operation, when a condition of overpressure is created inside the system and wins the resistance of the elastic means **8,** the shutter **5** lifts up and opens the inlet way **3** to the fluid that flows into the valve body **2** and is discharged through the outlet way **7** in the desired direction.

The fluid keeps being discharged as long as the inside pressure is such as to win the force exerted by the elastic means **8** on the shutter **5.**

In the light of the above considerations, the safety valve carried out according to the invention achieves all the previously-stated objects.

In particular, it achieves the object to produce a safety valve that does not force the operator to carry out adjustments while installing the valve, since the discharge direction can be set by rotating the cap.

Since said rotation can be carried out at any moment, the invention also achieves the aim to produce a safety valve that makes it possible to adjust the discharge direction of the pressurized fluid even after installation of the valve.

During the production stage, the overpressure valve that is the subject of the invention may undergo changes that, though not illustrated or described herein, shall nonetheless be covered by the present patent, provided that they come within the scope of the claims that follow.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Safety valve (1; 100) for pressurized fluid systems comprising a valve body (2) in which it is possible to identify:
- at least one inlet way (3) carried out at the level of one end (4) of said valve body (2) that can be connected to said system containing said pressurized fluid;
- at least one shutter (5) slidingly coupled to said valve body (2) and sealingly cooperating with an annular edge (6) that defines the perimeter of said inlet way (3);
- at least one outlet way (7) for discharging said pressurized fluid outside the system;
- elastic means (8; 108) having a first end (9) positioned against said shutter (5) and a second end (10) positioned against retaining means (11) provided in said valve body (2),
**characterized in that** said retaining means (11) comprise a cap (12; 112) in which it is possible to identify a core (13; 113) projecting towards the outside of said valve body (2) through a hole (14) present at the end (15) opposite said inlet way (3), wherein said cap (12; 112) is provided with a duct (23) comprising at least one inlet (23a) in communication with the inside of said valve body (2) and at least one outlet (23b) in communication with the outside and present on the lateral edge of said core (13; 113) in order to create said outlet way (7).

2. Valve (1; 100) according to claim 1), **characterized in that** said cap (12; 112) comprises an annular body (17; 117), present at one end of said core (13; 113) and contained inside said valve body (2), which projects from the lateral surface (13a) of said core (13) in order to define a first counteracting surface (20) positioned against said second end (10) of said elastic means (8; 108) and a second counteracting surface (21) opposite said first counteracting surface (20) and arranged so as to be in contact with a perimeter recess (22) obtained on the annular edge (22a) of said hole (14) in said valve body (2).

3. Valve (100) according to claim 2), **characterized in that** said cap (112) comprises a centering body (131) which projects from said annular body (117) on the side opposite said core (113), suited to slidingly define a precision coupling with the inside of said elastic means (108).

4. Valve (1; 100) according to claim 2), **characterized in that** said core (13; 113) and said annular body (17; 117) are carried out in a single body.

5. Valve (100) according to claim 3), **characterized in that** said core (113), said annular body (117) and said centering body (131) are carried out in a single body.

6. Valve (1; 100) according to claim 1), **characterized in that** said duct (23) comprises at least one inlet channel (24) in communication with said inlet (23a), and at least one outlet channel (25) in communication with said outlet (23b), defining longitudinal axes (Xa, Xb) that are incident on each other.

7. Valve (1; 100) according to any of the preceding claims,
**characterized in that** said cap (12) defines a second longitudinal axis (Xb) with respect to which any cross-section plane defines a circular cross section for said cap.

8. Valve (1; 100) according to claim 6), **characterized in that** the cross section of the inside of said valve body (2) has a substantially circular profile whose diameter corresponds to the diameter of the annular edge (30) of said annular body (17) in such a way as to obtain a free and sliding coupling.

9. Valve (1; 100) according to claim 1), **characterized in that** said elastic means (8; 108) are constituted by a helical spring (8).

10. Valve (100) according to claim 3), **characterized in that** said elastic means (108) are constituted by a helical spring (108a) whose lateral inner surface slidingly carries out a precision coupling with said centering body (131).

11. Valve (1; 100) according to claim 9) or 10), **characterized in that** said spring (8a; 108a) has the shape of a truncated cone.

12. Valve (1; 100) according to claim 9) or 10), **characterized in that** said spring (8a; 108a) is cylindrical in shape.

13. Valve (1; 100) according to claim 2), **characterized in that** said perimeter recess (22) of said hole (14) in said valve body (2) is obtained through cold plastic deformation of said annular edge (22a).

14. Valve (1; 100) according to claim 13), **characterized in that** said cold plastic deformation is carried out with a calking operation.

15. Valve (1; 100) according to claim 13), **characterized in that** said cold plastic deformation is carried out with an expanding operation.

16. Valve (1; 100) according to claim 1), **characterized in that** said at least one shutter (5) comprises a seal holder (5a) with a sealing pad (31) that cooperates with the annular edge (6) of the inlet way (3).
